# FASCICULE DE BREVET EUROPEEN

(11) **EP 0 514 241 B1**
(45) Date de publication et mention de la délivrance du brevet: **29.05.1996**
(21) Numéro de dépôt: 92401246.1
(22) Date de dépôt: 30.04.1992
(51) Int. Cl.: B23Q 7/14

(54) **Installation pour la circulation de palettes motorisées porte-pièces**
Einrichtung zum Umlaufen von angetriebenen Werkstückträgerpaletten
Installation for circulating motorized workpiece-supporting pallets

(30) Priorité: 02.05.1991 FR 9105414
(43) Date de publication de la demande: 19.11.1992
(73) Titulaire: Prodel, Jacques, F-60170 Ribecourt (FR)
(72) Inventeur: Prodel, Jacques, F-60170 Ribecourt (FR)
(74) Mandataire: Netter, André

(56) Documents cités:
- WO-A-91/17018
- GB-A- 2 190 612
- US-A- 3 518 945
- US-A- 4 576 099
- US-A- 4 706 796
- US-A- 4 800 818
- US-A- 4 928 806

## Description

La présente invention est relative aux installations d'usinage et/ou d'assemblage de pièces dans lesquelles les pièces à usiner et/ou à assembler sont portées par des palettes circulantes qui les amènent à un ou plusieurs postes d'usinage et/ou d'assemblage, où elles s'immobilisent pour permettre l'usinage et/ou l'assemblage des pièces et, de là, se déplacent vers un autre poste, et ainsi de suite.

D'une manière générale, dans le domaine du transfert automatisé de pièces d'un poste à un autre poste, différents systèmes ont été développés et sont actuellement utilisés.

Dans certains de ces systèmes, des chariots autonomes autoguidés comprennent un moteur électrique alimenté par une batterie d'accumulateurs qu'ils portent, laquelle est rechargeable en énergie aux postes de travail ou dans des zones de parking.

Ces chariots motorisés sont de grandes dimensions (environ 0,5xlm à lx2m) ) et sont généralement utilisés pour le transport de pièces volumineuses et/ou lourdes (de 25kg à 500kg) et circulent à faible vitesse (10 m/min. à 40m/min. en moyenne).

Ces équipements de manutention automatique se déplacent à l'intérieur d'ateliers de production suivant des trajets en partie ou totalement définis au préalable. Ils disposent de moyens de pilotage intégrés aux chariots pour asservir leur direction et leur vitesse de circulation en fonction d'une détection, permanente ou discontinue, du trajet parcouru et de celui restant encore à parcourir.

Cette technique prévoit de nombreuses réalisations qui permettent à ces chariots de circuler en toute sécurité, au moyen de capteurs embarqués de différentes natures : électromécaniques, en particulier associés à des pare-chocs actionnant un ou plusieurs interrupteurs de marche; également inductifs, optiques, télémétriques, etc. Ces capteurs d'environnement sont associés à des circuits d'asservissement d'embrayages, de freins et de variateurs de vitesse du ou des moteurs de ces chariots. Ils commandent le freinage, le ralentissement et l'arrêt (pour éviter toute collision brutale avec d'autres chariots ou obstacles ou encore leur avance lente et leur arrêt dans chaque zone de positionnement prévue aux postes travail, qui comprennent souvent les moyens de recharge de leur batterie.

Par ailleurs, les progrès accomplis dans la miniaturisation des moteurs et des capteurs associés à une électronique de commande largement diffusée, et donc bon marché, ont permis le transfert de ces technologies bien connues à des applications visant l'entraînement de palettes de petites dimensions (0,3mxO,4m) dans des installations prévues pour l'usinage et/ou l'assemblage de pièces de faible poids (de lkg à 45kg) circulant à grande vitesse (120 m/min).

Il existe de nombreuses réalisations faisant appel à des palettes motorisées. Ces palettes sont d'une taille très voisine de celle des voitures-jouets téléguidés et leur mode de motorisation respectif est généralement semblable à celui desdits jouets. Elles sont équipées d'un motoréducteur électrique alimenté à partir d'une batterie qu'elles portent, ledit moteur étant asservi en vitesse par différents circuits électroniques gérant les accélérations et les freinages de deux ou quatre roues motrices tournant autour d'axes horizontaux.

Compte tenu de cet art antérieur, on a proposé des réalisations concernant les installations d'assemblage et/ou d'usinage pour la fabrication de pièces portées par des palettes motorisées, qui se distinguent l'une de l'autre généralement par la constitution des moyens d'entraînement de ces palettes coopérant avec des dispositifs pour leur guidage, rectiligne ou courbe, propres à assurer leurs changements de direction sur un plancher, sur rails, ou autres supports.

Ces installations sont basées sur le principe du travail "hors ligne". La plupart des opérations d'assemblage et/ou d'usinage s'y effectuent en dehors d'une ligne générale de circulation, à savoir dans des circuits en dérivation par rapport à cette ligne. Les postes de travail, manuels et/ou automatiques, sont alors en dehors de la ligne générale de circulation à grande vitesse des palettes, dans un circuit dérivé, le long duquel sont effectuées les opérations d'assemblage et/ou d'usinage.

On connaît, ainsi, par la publication US-A-3 518 945, des palettes motorisées, destinées à servir dans une installation pour porter des pièces vers des postes de travail,
l'installation comprenant une surface de roulement et un système de portions de rail d'entraînement et/ou de guidage définissant une voie principale, des voies secondaires, et leurs interconnexions,
lesdites palettes comportant des moyens de soutien comprenant des roues-support propres à coopérer avec la surface de roulement, et des moyens d'entraînement/guidage propres à coopérer avec le système de portions de rails, ces moyens d'entraînement/guidage comprenant des couples roue motrice/roue de guidage.

De telles palettes sont destinées à porter des pièces relativement lourdes, et à des vitesses faibles.

En conséquence, l'installation destinée à recevoir de telles palettes n'offre pas une grande compacité, laquelle ne peut être obtenue que lorsque les changements de direction des palettes sont réalisés à angle droit sans changement de l'orientation des palettes dans l'espace. De plus les moyens de guidage et d'entraînement sont complexes et nombreux.

Dans des installations, plus récentes, destinées à l'assemblage et/ou l'usinage de pièces de petites dimensions et de faible masse, une plus grande universalité d'exploitation peut être obtenue. Cependant, cette universalité entraîne fréquemment une modification de l'orientation des palettes au cours d'un changement de direction, par exemple dans le cas où des raisons d'ergonomie ou des nécessités techniques prédominent le critère d'encombrement de leur aire de virage.

Les derniers progrès accomplis dans l'architecture de montage des différents équipements de base ont conduit à réaliser des installations de plus en plus compactes comprenant une très grande densité de voies de circulation avec de nombreux carrefours et changements de direction très souvent distants de moins de 0,5m.

Dans ces conditions, les vitesses de pointe de plus de 1OOm/mn indiquées par les constructeurs de palettes motorisées ne sont pas très significatives, car elles ne sont presque jamais atteintes dans des installations très compactes.

Les performances réelles globales d'exploitation de ces installations sont en fait essentiellement liées aux performances d'accélération et de décélération des palettes, principalement dans les virages qui se succèdent à intervalles très rapprochés.

D'autre part, la capacité de freinage sans dérapage des palettes est également déterminante lorsqu'elles circulent à grande vitesse. Les risques de tamponnement ne sont pas exclus, notamment lorsqu'une palette change de direction de circulation en quittant la voie de circulation principale, sans changer d'orientations, pour atteindre un poste "hors ligne" situé sur une voie en dérivation. Cette palette constitue alors un obstacle pour la palette qui suit.

Un problème connexe réside dans la difficulté de faire circuler à grande vitesse les palettes, sans que les pièces, souvent instables dans la phase de leur pose sur les palettes, avant leur assemblage ou usinage, soient projetées du fait des vibrations et chocs engendrés dans les virages très courts desdites palettes.

Enfin, d'une manière générale, il est souhaité faire circuler les palettes pendant de longues heures, sans nettoyage de l'installation. Mais on a observé que, dans un tel cas, l'adhérence des palettes automotrices sur un plancher ou analogue devient aléatoire en raison des souillures (graisse, huile, copeaux etc), qui affectent la ligne de circulation et dont l'effet est d'autant plus nocif que le poids de la charge transportée est élevé.

Le but de la présente invention est de procurer une palette et l'installation destinée à la recevoir, qui satisfait globalement les quatre types de problèmes suivant :
Le premier est celui de l'universalité des moyens d'entraînement de la palette, associés à ses moyens de guidage sur un plancher, pour la faire circuler sans discontinuité avec le même principe de fonctionnement aussi bien dans les voies de circulation rectilignes que curvilignes, avec ou sans changement de son orientation dans l'espace.

Le second est celui du guidage précis, sans jeu, de la palette, aussi bien en ligne droite que dans les virages. Cette précision de circulation offre de nombreux avantages, notamment pour la dépose de pièces par des robots sur les palettes en mouvement, dans des conditions d'autant plus économiques que le guidage des palettes est précis au moment de cette opération.

Le troisième est celui de la maîtrise permanente de l'excellence de la "tenue de route" de la palette, aussi bien en ligne droite que dans les virages, c'est-à-dire de sa capacité d'adhérence sans dérapage sur les voies de circulation, principalement aux moments de ses plus fortes accélérations ou de ses plus importants freinages réalisés sur les plus courtes distances. Les meilleures performances sont évidemment atteintes dès lors que la motricité de la palette met en jeu un plus grand nombre de roues motrices dans les passages difficiles et que leurs moyens respectifs d'entraînement ou de freinage coopèrent de façon équilibrée, sans glissements parasites, aussi bien en ligne droite que dans les virages, avec ou sans changement de l'orientation des palettes dans l'espace.

Dans les solutions connues, la "tenue de route" et les performances d'accélération et de décélération de la palette sont très dépendantes du poids de la charge transportée. Ainsi lorsque la palette n'est pas chargée, ses roues motrices risquent de patiner sous l'effet d'une trop grande accélération de la vitesse de son moteur. Cet inconvénient conduit les constructeurs à limiter ces accélérations en conséquence. Il en est de même pour les décélérations dont la valeur ne doit pas être trop grande, notamment lorsque la palette est très chargée et présente une forte tendance au dérapage incontrôlé, en particulier lorsque les pistes de roulement sont grasses.

Le quatrième est celui de la fiabilité et de la maintenance des moyens d'entraînement de la palette dont les "pneus" ou analogues et le revêtement des "voies" de circulation constituent dans ces installations des pièces d'usure et de rechange essentielles. Ce problème est particulièrement important lorsque les quatre roues motrices de la palette sont montées sur deux arbres moteurs parallèles à axes horizontaux par rapport à leur plancher d'entraînement et qu'elles ne sont pas orientables dans les virages. Il en résulte un phénomène de ripage au de dérapage parasite de la palette pendant ses changements de direction et une usure importante de ses roues motrices et pistes d'entraînement.

L'invention propose à cet effet, une palette du type de celle de la publication US-A-3 518 945, dans laquelle un couple roue motrice/roue de guidage est agencé sous la forme d'une roue horizontale motrice et d'une roue horizontale de guidage libre en rotation, ces deux roues étant coaxialement superposées, sensiblement au-dessus et autour d'une roue-support, d'axe horizontal, verticale et auto-orientable sur ladite surface de roulement qui définit l'horizontale, un tel couple de roues horizontales constituant, avec la roue-support qu'elle surmonte, une structure d'étendue verticale dite "plot", lesdites roues horizontales étant logeables entre ou contre des portions de rail pour définir un point de contact du guidage de la palette et permettre son entraînement, et dans laquelle au moins un second plot fait saillie à une distance du premier plot choisie pour que l'une au moins de ses roues horizontales vienne en contact avec les portions de rails qui coopèrent avec le premier plot, ou avec d'autres portions de rails du système, en définissant un second point de contact pour pour le guidage de la palette, et que l'entraînement de la palette peut être assuré par l'une au moins des roues horizontales motrices du premier et du second plot.

Afin de faire circuler les palettes dont il est question ci-dessus, l'invention prévoit également une installation pour porter des pièces vers les postes de travail, du type comprenant un support possédant un plancher sensiblement horizontal sur lequel sont installées, en des positions choisies, des portions de rails d'entraînement et/ou de guidage définissant, essentiellement par couples, une voie principale, des voies secondaires, et leurs interconnexions, lesdites portions de rail permettant à au moins une palette de se déplacer pour desservir des postes de travail et présentant en des niveaux prédéterminés des pistes de roulage ou d'entraînement qui se font face.

Dans la description qui suit, faite à titre d'exemple, d'une installation selon l'invention, on se réfère aux dessins annexés dans lesquels :
- la figure 1 est une représentation schématique en plan d'une installation selon l'invention, comme vue en dessous du plancher, le plancher étant supposé transparent;
- la figure 2 est une vue,partiellement en coupe transversale, d'une palette, à plus grande échelle.
- la figure 3 est une vue en coupe selon la ligne 3-3 de la figure 2;
- la figure 4 est une vue d'une partie de la figure 1, mais à plus grande échelle;
- la figure 5 est une vue perspective schématique d'une partie de plancher montrant, écartées les unes des autres pour une meilleure compréhension et à plus grande échelle, certaines de ses pièces;
- la figure 6 est relative à une variante de la configuration d'un rail d'entraînement;
- la figure 7 est une vue en coupe suivant les lignes 7-7 de la figure 4, montrant une palette au droit d'un carrefour, changeant de direction sans changer d'orientation dans l'espace.
- la figure 8 est une vue en perspective d'une butée de déviation éclipsable;
- la figure 9 est un schéma illustrant la détermination des parties incurvées des rails de guidage et d'entraînement dans un carrefour entre une branche de circulation et une branche perpendiculaire.
- la figure 10 est une vue d'une palette au droit du carrefour entre la ligne générale de circulation et une dérivation et poursuivant sa course suivant la ligne générale;
- la figure 11 est une vue en coupe suivant la ligne 10-10 et 11-11 de la figure 10;
- la figure 12 montre une palette légèrement à l'amont de celle montrée sur la figure 10;
- la figure 13 montre une palette à l'aval de la position montrée sur la figure 10;
- la figure 14 montre le montage d'un roulement de guidage;
- la figure 15 montre une palette en position d'usinage ou d'assemblage de la pièce qu'elle porte, pour une variante;
- la figure 16 est une vue en coupe suivant la ligne 16-16 de la figure 15;
- la figure 17 montre une palette dans un simple virage, changeant de direction sans changer d'orientation dans l'espace.
- la figure 18 est une vue en coupe suivant la ligne 18-18 de la figure 17;
- la figure 19 est un schéma illustrant la détermination des parties incurvées des rails d'entraînement et de guidage au raccordement entre une branche de circulation et une branche perpendiculaire.
- la figure 20 est une vue en plan par-dessous d'une palette pour une autre forme de réalisation;
- la figure 21 est un schéma d'une installation prévoyant un aiguillage vers une partie courbe de la ligne de circulation, montrant le changement de direction d'une palette avec modification de son orientation, et vers une partie rectiligne;
- la figure 22 est un schéma relatif à la commande de l'aiguillage;
- la figure 23 est une vue en coupe suivant la ligne 23-23 montrant une réalisation de cette commande;
- la figure 24 est analogue à la figure 21 mais pour une autre condition;
- la figure 25 est une vue en coupe verticale d'un dispositif de plot fixé à un angle d'une palette, pour une autre forme de réalisation de l'installation;
- la figure 26 est une vue schématique en plan d'une partie de l'installation, pour cette forme de réalisation montrant une palette ayant franchi un carrefour sans changement de direction;
- la figure 27 est une vue d'un dispositif pour la commande d'un aiguillage prévu à un carrefour;
- la figure 28 est analogue à la figure 26 mais montre une palette au cours d'un virage;
- la figure 29 est une vue analogue à la figure 28 mais montre la palette après qu'elle ait franchi le virage;
- la figure 30 est une vue d'une installation suivant cette forme de réalisation.

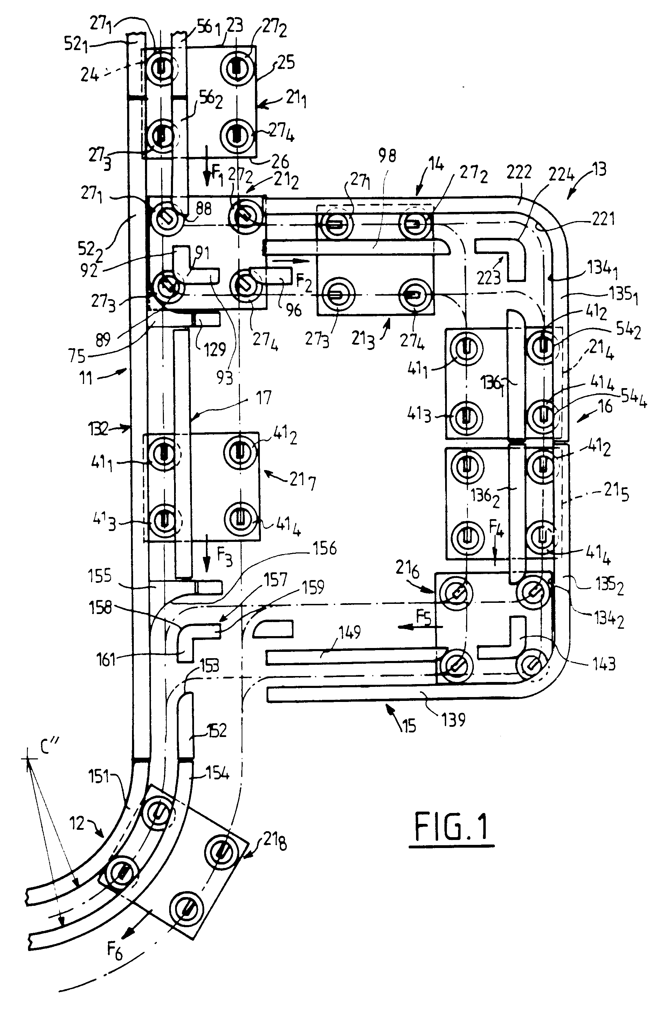

Sur la figure 1 on a montré, vue par le dessous, une partie d'une installation selon l'invention dont le plancher est supposé transparent, et qui comprend une voie générale de circulation 11, rectiligne, se poursuivant par une partie curviligne 12, et d'où dépend une dérivation 13 à branche 14 raccordée à la voie ou ligne de circulation générale et perpendiculaire à celle-ci, et à branche 15, parallèle à la branche 14, de raccordement à la ligne générale 11, les branches 14 et 15 étant reliées par une partie 16 parallèle à la ligne générale.

Sur cette partie d'installation, on a montré une première palette 21-1 circulant sur la ligne générale 11, en amont de la dérivation 13, une palette 21-2 au raccordement entre la ligne de circulation générale 11 et la branche 14 de dérivation 13 et s'engageant dans celle-ci, une palette 21-3 sur la branche 14 de la dérivation 13, deux palettes 21-4 et 21-5 sur la partie 16 de la dérivation 13 parallèle à la ligne générale 11, la palette 21-5 étant dans une position d'assemblage et/ou d'usinage, une palette 21-6 au raccordement entre la partie 16 de la dérivation 13 et la branche 15 de celle-ci, une palette 21-7 sur la partie 17 de la ligne générale de circulation comprise entre les branches 14 et 15 de la dérivation 13 et une palette 21-8 circulant sur la partie curviligne 12 de la ligne de circulation.

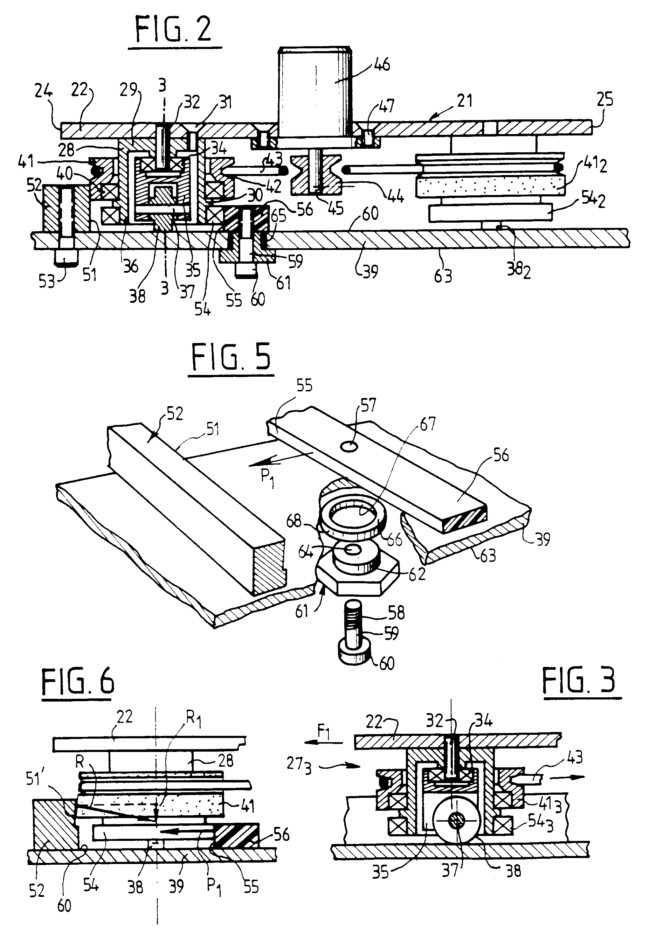

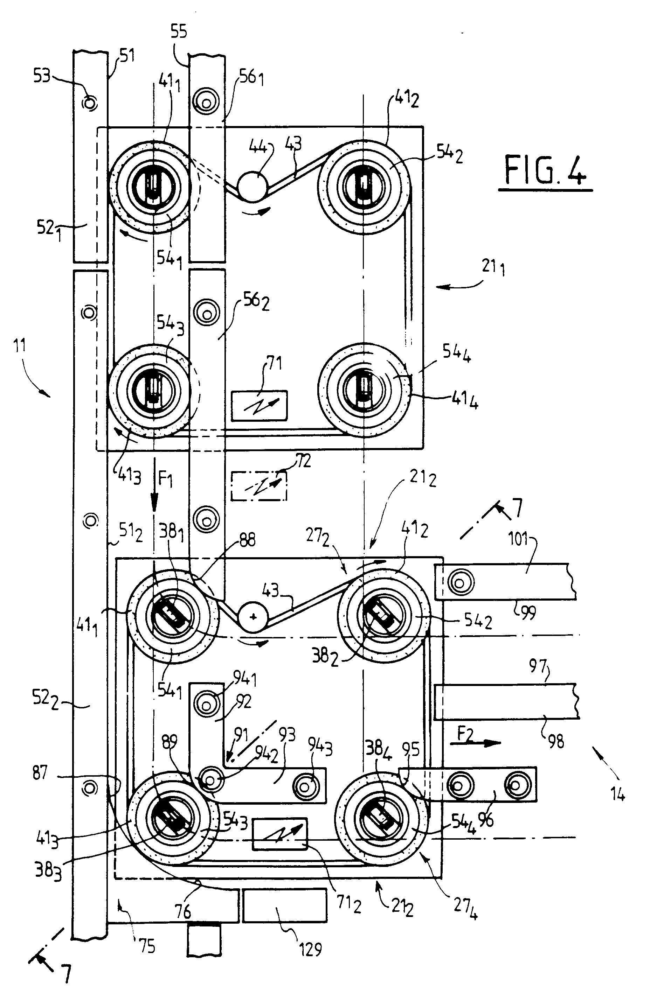

Une palette 21 (figures 1 et 2) comprend un corps de palette, ou plateau 22, de forme générale rectangulaire, limité par des bords 23, 24, 25 et 26 (figure 1). La palette comprend, au voisinage de ses angles, des plots, respectivement 27-1, 27-2, 27-3, 27-4, identiques entre eux. Un plot 27 est constitué par un fût cylindrique 28 (figure 2) dont le fond supérieur 29 est fixé sur le plateau 22 par une ou plusieurs vis 31 traversant le plateau. Un axe 32 traverse le plateau 22 et le fond 29 au centre de celui-ci et sert au positionnement de la bague intérieure d'un roulement à billes 34, dont la bague externe fait partie d'un manchon 35, ainsi coaxial au corps 36 du fût 28. La partie inférieure du manchon 35 sert de support à l'axe horizontal 37 d'une roue 38 prévue pour le déplacement de la palette sur le plancher 39 de l'installation. La ligne moyenne de l'axe 37 est distante du prolongement de la ligne moyenne de l'axe 32 (figure 3).

Chaque palette 21 roule sur la face supérieure 60 du plancher 39 par quatre roues 38-1, 38-2, 38-3, 38-4 placées en ses angles, dont le montage les rend auto-orientables et qui supportent le poids de la charge transportée.

Sur un épaulement 30 du corps 36 du fût 28 est en outre montée, par l'intermédiaire d'un roulement à billes 40, une poulie 41, à gorge 42 prévue pour le passage d'une courroie 43. Il y a ainsi, équipant une palette, quatre poulies 41-1, 41-2, 41-3, 41-4, faisant fonction de roues motrices, à axe vertical (figure 4), sur lesquelles passe la courroie 43. Entre les roues motrices 41-1 et 41-2, la courroie 43 passe sur une petite poulie 44 calée à l'extrémité d'un arbre de sortie 45 (figure 2) d'un moteur ou motoréducteur électrique 46 (alimenté par une batterie non représentée) fixé sur le plateau 22 de la palette par des vis 47.

Dans la position montrée sur les figures 2, 3 et 4, les roues motrices 41-1 et 41-3 de la palette 21-1 coopèrent avec la face interne (51-1, 51-2) d'un rail (52-1, 52-2), ou rail d'entraînement, fixé sur le plancher 39 de l'installation par des vis 53.

Le rail 52, à section rectangulaire, est avantageusement en acier ou en une matière plastique comme celle connue sous le nom de DELRIN (marque déposée).

La piste de roulage des roues motrices 41 de la palette sur le rail 52 est généralement verticale et située en surplomb du plancher 39. Cette disposition présente l'avantage d'exposer le moins possible les roues motrices ou poulies 41 et leurs pistes d'entraînement aux souillures (graisse, huile, copeaux etc,) qui affectent principalement la surface généralement horizontale de circulation 60 du plancher 39.

La partie inférieure du fût 28 d'un plot 27 coopère, par l'intermédiaire d'un roulement à billes 54, avec la face interne 55 d'un second rail 56, ou rail de guidage, parallèle au rail 52, à section rectangulaire, et moins haut que ce dernier. Le rail 56 est également avantageusement en acier ou en matière plastique, comme le DELRIN.

Le rail 56 présente, régulièrement réparties sur sa longueur, des perforations 57 (figure 5) dont chacune sert au logement de l'extrémité filetée 58 d'une vis 59 de fixation du rail, à tête 60. Chaque vis 59 traverse le plancher 39 avec interposition d'un écrou 61 à tête hexagonale et couronne cylindrique 62 et qui prend appui contre la face inférieure 63 du plancher. L'écrou 61 est traversé par un canal 64, excentré par rapport à sa face latérale et la couronne 62 et qui sert au passage de la vis 59. Entre la couronne cylindrique 62 et la perforation 65 du plancher 39 prévue pour son passage est logé un anneau 66 en matériau élastomère à face interne 67 et face externe 68.

Après desserrage de la vis 59, il est possible de modifier, par rotation de l'écrou 61, la position angulaire de la couronne 62 et ainsi, en raison de l'excentration de celle-ci, la position transversale de la partie correspondante du rail 56, cette nouvelle position étant maintenue par resserrage de la vis 59.

La distance entre deux dispositifs consécutifs de fixation à excentrique dépend de la résilience du rail de guidage 56 et de la possibilité d'écrasement de l'anneau 66 en matériau élastomère.

Lorsque le moteur ou moto-réducteur électrique 46 est alimenté, il entraîne, par l'intermédiaire de la petite poulie 44, la courroie 43 qui, à son tour, entraîne les roues motrices 41-1, 41-2, 41-3, 41-4. Les roues motrices 41-1 et 41-3 qui équipent la palette 21 sont appliquées sous pression par leur jante contre la face latérale 51 du rail 52-1, 52-2; la pression d'application résulte de l'action de la face interne 55 du rail de guidage 56 contre les roulements 54-1 et 54-3 des plots 27-1 et 27-3.

Chaque palette est ainsi guidée par ses roulements d'appui précontraints. Dans la position montrée sur les figures 1 et 4 la palette 21-1 est guidée par ses roulements 54-1 et 54-3 coopérant avec la piste 55 du rail de guidage 56-1 et 56-2 qui est verticale et présente les mêmes avantages de propreté que la piste d'entraînement 51.

La trajectoire de la palette 21 est ainsi rigoureusement déterminée, sans jeu, comme schématisé par la flèche F1 (figures 3 et 4).

Le réglage préalable de la position du rail de guidage 56 par ajustement des positions angulaires des écrous 61 permet de régler la pression des roues motrices sur leur piste d'entraînement à la valeur désirée. Cette pression, schématisée par la flèche P1 est de nature élastique grâce à la présence de l'anneau 66 en matériau élastomère dont l'action est celle qui correspond à une force dont la valeur peut être plusieurs fois supérieure au poids de la charge maximum susceptible d'être portée par la palette.

Dans la forme de réalisation montrée sur la figure 6, la face opératoire du rail d'entraînement 52 présente une partie oblique 51′ se rapprochant de l'axe à l'éloignement de la face supérieure 60 du plancher 39. La roue motrice ou poulie d'entraînement 41 est appuyée sous pression par la coopération de la face 55 du rail de guidage 56 comme schématisé par la flèche P1 et la réaction provoquée par la coopération de ladite roue motrice 41 avec la face oblique 51′ est dirigée vers le bas comme montré par la flèche R, avec une composante schématisée par la flèche R1, contribuant ainsi à l'application sous pression de la roue 38 contre la face supérieure 60 du plancher 39.

En l'absence de toute charge transportée par la palette, les roues motrices sont appliquées contre la piste d'entraînement avec une force dont la valeur peut atteindre plusieurs dizaines de kilos. Aucun sautillement des roues motrices n'est possible. La "tenue de route" des palettes en est encore améliorée.

L'adhérence des jantes des roues motrices 41 ou poulies sur les pistes d'entraînement est accrue par le fait qu'elles sont en matière plastique souple ou comportent un revêtement rapporté en matériau élastomère légèrement déformable.

Dans d'autres formes de réalisation, les roues motrices présentent des dentures qui coopèrent en roulant avec des creux conjugués aménagés dans les rails d'entraînement.

L'antidérapage des roues motrices est ainsi assuré en s'affranchissant en presque totalité du poids de la charge transportée.

Dans d'autres réalisations ou configurations, c'est le rail d'entraînement qui est monté sur le plancher par l'intermédiaire d'excentriques et d'anneaux en élastomère, de sorte qu'il est appuyé directement contre la ou les roues motrices 41 avec lesquelles il coopère, l'autre rail parallèle continuant à jouer son rôle de rail de guidage en coopération avec les roulements de guidage des plots de la palette, l'application sous pression étant ici obtenue par l'action du rail d'entraînement.

Dans tous les cas, la distance entre les faces en regard des deux rails, respectivement d'entraînement et de guidage, est plus petite que la somme des rayons des poulies 41 et des roulements 54, la différence étant de l'ordre de 0,5mm.

A partir de la position montrée par la palette 21-1 (figure 1), la palette peut, ou bien poursuivre sa trajectoire le long de la ligne 11 pour atteindre une position comme celle montrée par la palette 21-7, ou bien s'engager dans la branche 14 de la dérivation 13, prévue par exemple pour le traitement des pièces portées par les palettes qui la parcourent. Le choix entre ces deux trajets dépend de la coopération d'une mémoire électronique 71 équipant la palette avec une tête de lecture 72 portée par le plancher comme montré sur la figure 4.

Dans le cas où la palette doit changer de direction, comme montré en 21-2 sur la figure 4, la mémoire électronique 71 a envoyé un signal à la tête de lecture 72, ce qui a provoqué l'érection d'une butée de déviation 75 (figures 4, 7 et 8) présentant une face cylindrique concave 76.

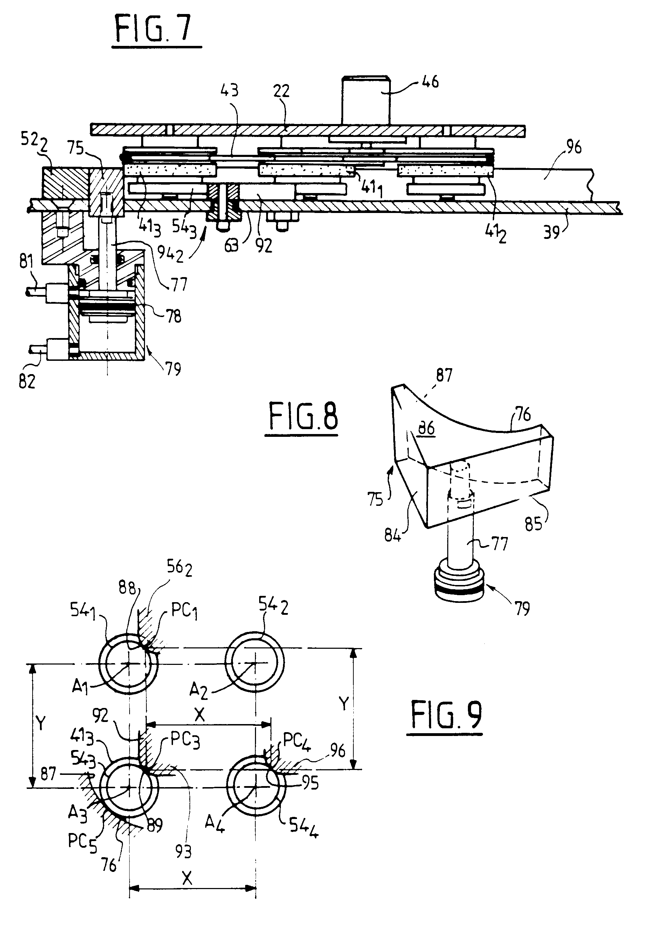

La butée de déviation 75 est portée par la tige 77 d'un piston 78 d'un vérin 79 sous-jacent au plancher 39 et dont les tubulures d'alimentation sont montrées en 81 et 82 (figure 7).

La butée de déviation 75 est en forme générale de prisme triangulaire (figure 8) limité, en outre de la face cylindrique concave 76, par des faces latérales planes 84 et 85 et une face supérieure 86.

Dans la condition montrée sur les figures 4 et 7, la palette 21-2 a entrepris son virage par la coopération de la roue motrice 41-3 avec l'extrémité 87 de la face cylindrique concave 76. La face 76 joue ainsi le rôle de rail d'entraînement, les roues motrices 41-1 et 41-3 ayant abandonné la face 51-2 du rail d'entraînement 52-2 dès la coopération de la roue motrice 41-3 avec la face cylindrique 76 de la butée de déviation 75.

Dans cette phase, le roulement 54-1 du plot 27-1 coopère avec l'extrémité incurvée 88 du rail de guidage ou de précontrainte 56-2. Le roulement 54-3 du plot 27-3 coopère avec la partie externe convexe 89 d'une équerre 91 à deux branches dont l'une, 92, est dans le prolongement du rail de précontrainte 56-2 et l'autre, 93, est perpendiculaire à la première. L'équerre 91 est montée sur le plancher 39 de l'installation par l'intermédiaire de dispositifs à excentrique 94-1, 94-2, 94-3 dont chacun a la constitution montrée sur la figure 5.

Le roulement 54-4 du plot 27-4 coopère avec l'extrémité incurvée 95 d'une portion de rail de guidage et de précontrainte 96 dans le prolongement de la branche 93 de l'équerre 91.

Dans son virage à angle droit, dont le rayon peut être très court, la palette est ainsi maintenue positivement en trois de ses "points", ou plus exactement de ses lignes verticales, par des contacts à roulement, donc sans qu'il en résulte une résistance quelconque à son avancement, la précision de sa trajectoire restant assurée par l'effet du montage sous précontrainte de la portion de rail 56-2 de l'équerre 91 et de la portion de rail 96 par l'intermédiaire des dispositifs à anneau en élastomère.

Dans la position montrée sur la figure 4, qui est celle de mi-course du virage, les roues auto-orientables 38 de la palette 21-2 sont à 45° par rapport à la direction de la ligne générale de circulation 11 et de la ligne de dérivation perpendiculaire 14.

L'entraînement de la palette est effectué par une seule roue motrice 41-3 alors que son guidage précontraint est assuré en permanence par trois de ses roulements de guidage 54-1, 54-3, 54-4. La roue motrice roule sans dérapage sur la surface cylindrique 76 qui s'oppose directement aux effets de la force centrifuge engendrée par la vitesse de parcours en courbe de la palette.

La palette change ainsi de direction de circulation sans changer son orientation dans l'espace. A sa sortie du virage, la poulie motrice 41-3 de la palette coopère avec la portion de rail d'entraînement 129, le roulement à billes 54-3 avec la branche 93 de l'équerre 91, le roulement à billes 54-4 avec la portion de rail 96 et la poulie motrice 41-2 avec la face 97 du rail d'entraînement 98, le roulement à billes 54-2 avec la face 99 du rail 101.

La figure 9 montre les plots à roulements 54-1, 54-2, 54-3, 54-4 dont les axes de rotation A-1, A-2, A-3, A-4 sur une palette forment les sommets d'un rectangle dont les côtés ont pour dimensions Y et X. Les points de contact des roulements avec leurs rails de guidage respectifs sont PC-1, PC-3 et PC-4.

Pour permettre un virage sans changement d'orientation de la palette, les courbes 88 et 89 sont réalisées par construction pour que la distance entre les deux points de contact PC-1 et PC-3 soit toujours égale à la cote Y d'entre-axes, des plots à roulements 54-1 et 54-3 et que la droite PC-1, PC-3 ainsi définie se déplace parallèlement à elle-même pendant le trajet de la palette dans ce virage.

Dans le même temps, le point de contact PC-4 décrit la courbe 95 qui, par construction, est réalisée pour que la distance entre les deux points de contacts PC-3 et PC-4 soit toujours égale à la distance X des plots à roulements 54-3 et 54-4 et que la droite PC-3, PC-4 ainsi définie se déplace parallèlement à elle-même pendant le trajet de la palette dans ce virage.

La palette est ainsi guidée en trois points de contact qui définissent deux droites perpendiculaires qui se déplacent parallèlement à elles-mêmes tout en gardant chacune respectivement la même orientation dans l'espace au cours du virage. En opposition à ces trois points de guidage, la roue motrice 41-3 prend appui sur la face cylindrique concave 76 en un point de contact PC-5.

Au cours du virage de la palette, le point de contact PC-5 décrit la courbe 76 alors que le point de contact PC-3 décrit la courbe 89. La forme de la courbe 76 se déduit donc de la forme de la courbe 89 par l'interposition entre les deux d'un intervalle constant PC-5, PC-3 égal à la somme des dimensions du rayon de la poulie motrice 41-3 et du rayon du roulement de guidage 54-3.

Les formes des courbes 88, 89, 95 des rails de guidage et la forme complémentaire du rail d'appui et d'entraînement 76 sont déterminées pour optimiser le passage en courbe à très haute vitesse de la palette.

Généralement ces différentes courbes sont des quarts de cercle qui présentent un rayon identique de, par exemple, 20 mm pour les courbes 88, 89, 95 et un rayon égal à 20 mm auquel on ajoute la somme des dimensions du rayon de la poulie et du rayon du roulement pour la courbe 76. Les courbes 76 et 89 sont quart-circulaires concentriques.

Lorsque la palette a achevé son virage, son entraînement se poursuit par coopération des roues motrices 41-1 et 41-2 de ses plots 27-1 et 27-2 avec la face 97 d'un rail d'entraînement 98 (figures 1 et 4), la sollicitation desdites roues motrices contre ladite face étant obtenue par coopération de la face 99 d'un rail de guidage précontraint 101 avec les roulements 54-1 et 54-2 de la palette 21-3.

La condition de maintien de la palette montrée en 21-3 pendant ce parcours est donc la même que celle qui a été décrite ci-dessus lorsque la palette 21-1 parcourt la ligne générale de circulation 11.

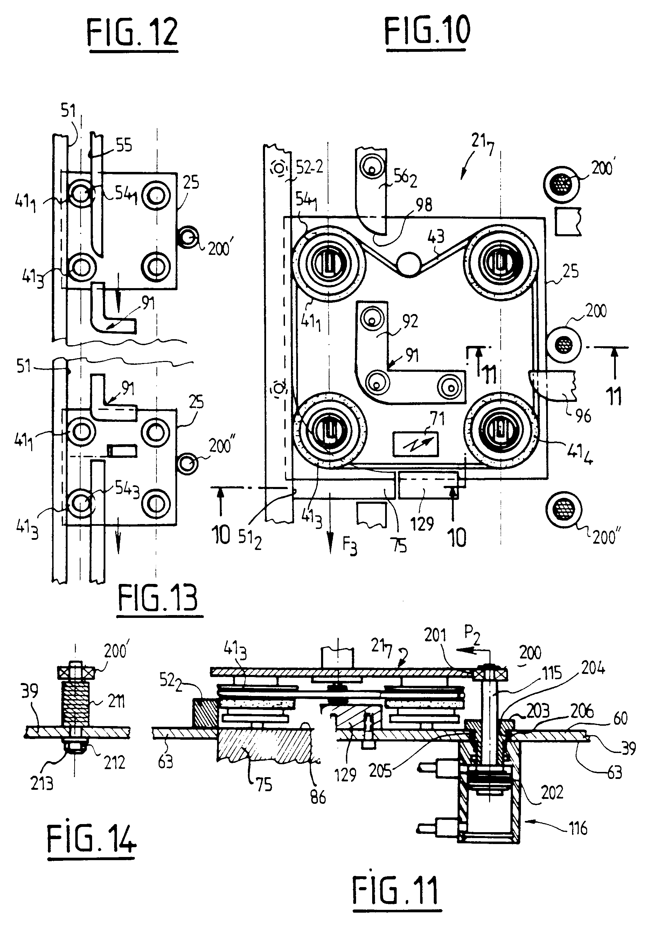

Lorsque, parvenant au voisinage de la jonction entre la ligne générale de circulation 11 et la branche de dérivation 14, la palette doit poursuivre la ligne générale et ne pas s'engager dans la branche 14 de dérivation perpendiculaire (figure 10), la mémoire électronique 71 de la palette ne commande pas l'érection de la butée de déviation 75 et l'entraînement de la palette continue à se faire par coopération des roues motrices 41-1 et 41-3 avec le rail d'entraînement 52-2. Par contre,elle a commandé, comme montré sur la figure 11, le dispositif d'érection d'un roulement à billes 200 servant de butée de guidage latéral au déplacement de la palette 21-7 lorsque celle-ci est au droit du carrefour et ne doit pas emprunter la branche 14 de la dérivation 13. Le roulement à billes 200 est porté par la tige 115 du piston 202 d'un vérin 116. Le corps de vérin 116 est fixé sous la face 63 du plancher 39 par l'intermédiaire d'un embout fileté 203 qui prend appui sur la face supérieure 60 du plancher 39. Cet embout 203 présente une partie cylindrique 204 dont la longueur est légèrement supérieure à l'épaisseur du plancher 39. La partie cylindrique 204 traverse un anneau 205 en matériau élastomère dont la face externe est comprimée dans un alésage 206 traversant le plancher 39. La fixation du vérin 116 sur le plancher 39 est ainsi "flottante".

La position du vérin 116 sur le plancher est telle que lorsque la tige 115 du vérin est rentrée, la distance horizontale entre l'axe du roulement 200 et le bord 25 de la palette est plus petite (de l'ordre de un millimètre) que la dimension du rayon de la cage extérieure 201 du roulement 200. Dans cette condition, le roulement 200 est inopérant. Lorsque la tige 115 du vérin est sortie et que le bord 25 de la palette vient au contact de la cage 201 du roulement 200 celui-ci se déplace latéralement sous l'effet de l'avancement de la palette, en déformant l'anneau 205 en élastomère qui participe à la fixation élastique du vérin 116 sur le plancher 39.

Sur la figure 11, la butée de déviation 75 est dans sa position éclipsée et sa face supérieure 86 est dans le prolongement de la face supérieure 60 du plancher 39.

Dans cette partie de sa course, la palette 21-7 est donc entraînée par ses roues motrices 41-1 et 41-3 coopérant avec la partie de la face interne 51-2 du rail d'entraînement 52-2, l'effort de sollicitation étant obtenu, pour cette partie de la course, par la pression P₂ exercée par l'appui précontraint du roulement 200.

A l'amont et à l'aval de cette position de croisement, la condition est celle montrée par les figures 12 et 13. Le bord 25 coopère alors avec un roulement à billes respectivement 200′ et 200˝ monté à l'extrémité d'un bloc de caoutchouc cylindrique 211 (figure 14) lequel est fixé sur le plancher 39 par un écrou 212 et une tige filetée 213.

Dans la partie du parcours qui suit, la palette est entraînée de manière identique à ce qu'il en était avant d'aborder la ligne de dérivation, le mouvement de la palette étant alors schématisé par la flèche F3.

Lorsque, ayant emprunté la dérivation 13, la palette 21-3 parvient à l'extrémité de la branche 14, elle poursuit sa course sans changer d'orientation, suivant la partie 16 de la dérivation 13 (figure 1), étant guidée par la partie quart circulaire 221 du rail 222 et par la partie convexe 224 d'une équerre 223 jusqu'à parvenir à la partie 16 de la dérivation 13.

Au cours de sa circulation sur cette partie 16, la palette, comme montré en 21-4, est entraînée par coopération de ses poulies d'entraînement 41-2 et 41-4 avec la face interne de la portion de rail en regard 136-1, la précontrainte étant fournie par coopération des roulements 54-2 et 54-4 avec la face interne 134-1 du rail 135-1.

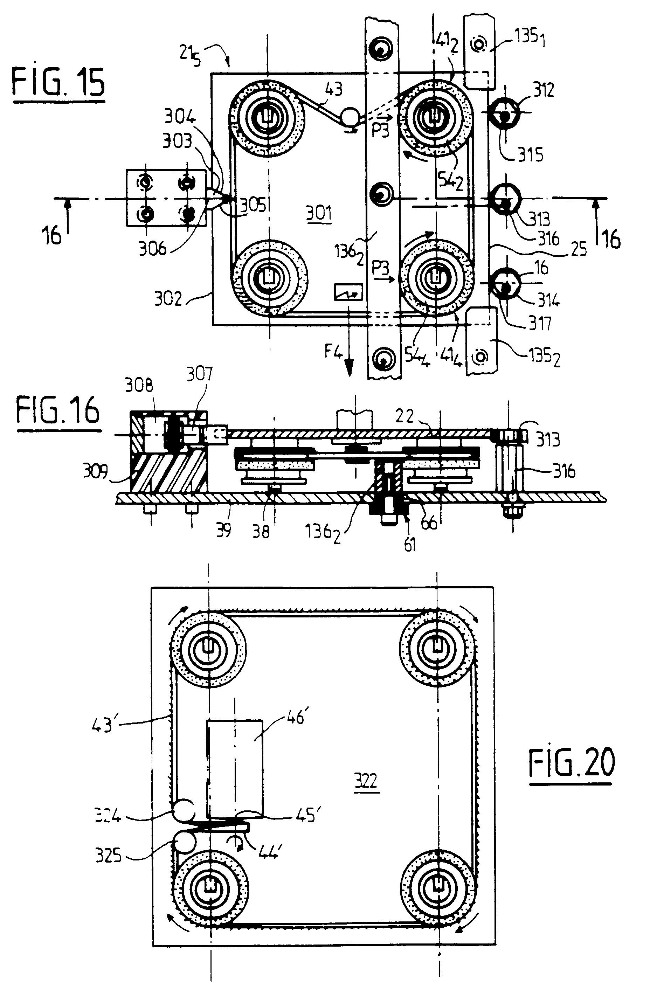

On se réfère maintenant aux figures 15 et 16 qui montrent selon une autre forme de réalisation que celle de la palette 21-5 de la figure 1, en même lieu et place, une palette 301 dans la position d'usinage ou d'assemblage sur la partie de la voie de circulation 16 parallèle à la ligne générale 11.

Au préalable, la poursuite de la circulation de la palette a été obtenue par la coopération de ses poulies d'entraînement 41-2 et 41-4 avec la face interne de la portion de rail 136-2 agissant comme rail de précontrainte à l'aide des dispositifs à excentrique 61 et anneau en élastomère 66 comme montré figures 5 et 6. Le rail d'entraînement à précontrainte 136-2 exerce une pression P3 sur les poulies 41-2 et 41-4 qui a pour effet d'appliquer le bord 25 de la palette 301 contre les cages extérieures de roulements à billes 312, 313, 314. Les roulements à billes assurent le guidage latéral sans jeu du plateau 22 portant les pièces à assembler et/ou à usiner.

Ce guidage de précision est ainsi directement réalisé par le bord de référence 25 du plateau 22, de préférence en acier traité rectifié, de la palette. Il se substitue au guidage moins précis réalisé antérieurement par la partie inférieure des plots 27-2 et 27-4 dont les roulements 54-2 et 54-4 s'appliquaient sur le rail de guidage 135-1,généralement en matière plastique.

Le bord de guidage précis du plateau de la palette coopère avec les roulements à billes respectivement 312, 313, 314 montés à l'extrémité de colonnes hexagonales 315, 316, 317 (figure 16).

Chaque partie basse d'une colonne présente une tige cylindrique de positionnement sans jeu dans un alésage précis traversant le plancher 39. L'axe de cette tige cylindrique est excentré par rapport à l'axe du roulement. L'extrémité de la tige cylindrique est filetée pour recevoir un écrou servant à la fixation à excentrique de la colonne porte-roulement sur le plancher 39.

Le réglage préalable de la position des roulements 312, 313, 314, de guidage du plateau de la palette par ajustement des positions angulaires de l'axe des colonnes hexagonales 315, 316, 317, permet de régler avec une très grande précision le guidage latéral de sa trajectoire rectiligne de circulation. L'excellence de cette précision permet notamment la dépose de pièces par des robots sur la palette en mouvement.

Dans le cas où l'assemblage et/ou l'usinage nécessite un arrêt précis de la palette sur sa voie de circulation, par rapport à un poste de travail fixé en relation avec le plancher 39, le plateau 22 de la palette 301 présente sur son bord 302 une forme de réalisation particulière permettant son indexage. A cet effet, une encoche 303 à faces obliques 304 et 305 est destinée à l'engagement d'un appendice 306, de forme conjuguée, qui forme l'extrémité d'un piston 307 coulissant dans un forage cylindrique 308 que présente un bloc 309 fixé sur le plancher 39 de l'installation.

A l'aide de ses moyens moteurs la palette s'arrête approximativement à environ plus ou moins 1mm de sa position d'indexage. La logique d'asservissement du piston 307 et appendice 306 associés commande alors son action d'indexage qui repositionne longitudinalement avec une très grande précision le plateau 22 de la palette sur sa voie de circulation et permet ainsi la bonne réalisation de l'assemblage et/ou de l'usinage de la pièce qu'elle porte.

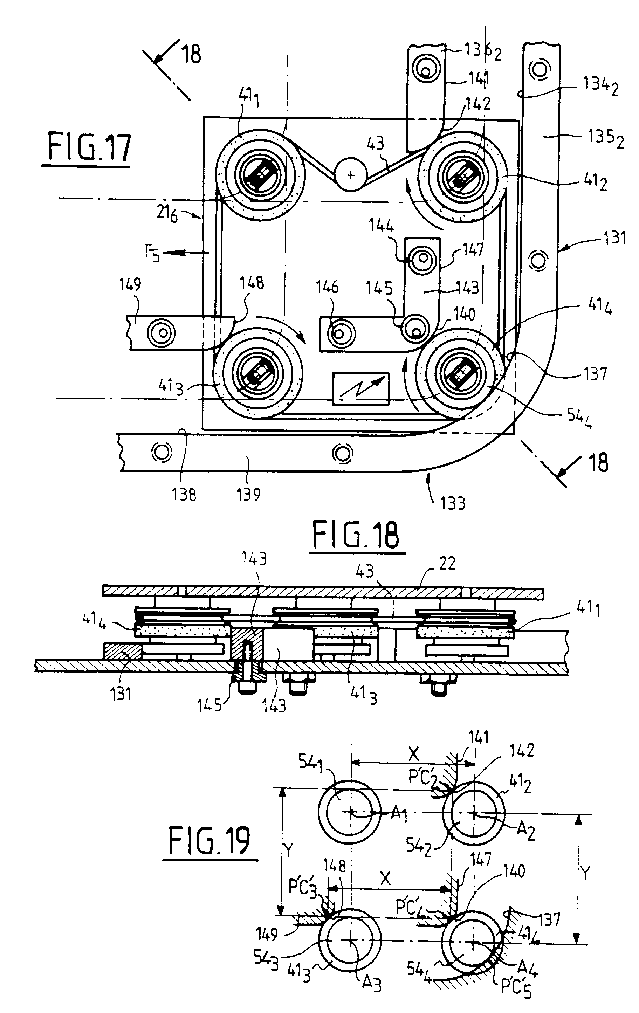

On se réfère maintenant aux figures 17 et 18 qui montrent une palette comme schématisée en 21-6 sur la figure 1, dans la position où elle est à mi-chemin entre la partie de dérivation 16 parallèle à la ligne générale 11 et la branche 15 de la dérivation destinée à raccorder cette partie avec l'aval de la ligne générale de circulation.

La face plane 134-2 du rail 135-2 se prolonge par une partie cylindrique 137, laquelle se raccorde à une partie plane 138 de la branche 15 du rail d'entraînement perpendiculaire à la branche 16.

La roue motrice 41-2,qui a coopéré avec la face 141 du rail 136-2, coopère avec la face incurvée convexe 142 qui forme l'extrémité du rail 136-2 et la roue motrice 41-4 coopère avec la face externe 147 d'une équerre 143 dont l'angle externe 140 est incurvé. L'équerre 143 est montée par l'intermédiaire de dispositifs à excentrique et anneau en élastomère, respectivement 144, 145 et 146 de sorte qu'elle réalise également la contrainte appliquant le plot 27-4 de la palette par le roulement 54-4 contre la face interne 137 du rail 131. La roue motrice 41-3 aborde l'extrémité incurvée convexe 148 d'un rail de précontrainte 149.

La figure 19 montre les plots à roulement 54-1, 54-2, 54-3, 54-4, dont les axes de rotation A1, A2, A3, A4, sur la palette forment les sommets d'un rectangle dont les côtés ont pour dimensions Y et X. Les points de contact des poulies avec leurs rails respectifs sont P′C′₂, P′C′₃ et P′C′₄.

Pour permettre un virage sans changement d'orientation de la palette, les courbes 142 et 140 sont réalisées par construction pour que la distance entre les deux points de contact P′C′₂ et P′C′₄ soit toujours égale à la distance Y d'entre-axes A2 et A4 des plots à poulies 41-2 et 41-4 et que la droite P′C′2-P′C′4 ainsi définie se déplace parallèlement à elle-même pendant le trajet de la palette dans ce virage.

Dans le même temps, le point de contact P′C′₃ décrit la courbe 148 qui, par construction, est réalisée pour que la distance entre les points de contact P′C′₄ et P′C′₃ soit toujours égale à la distance X des plots à poulies 41-3, 41-4 et que la droite P′C′₃-P′C′₄ ainsi définie se déplace parallèlement à elle-même pendant le trajet de la palette dans ce virage.

La palette est ainsi guidée en trois points de contact qui définissent deux droites perpendiculaires qui se déplacent parallèlement à elles-mêmes tout en gardant chacune respectivement la même orientation dans l'espace au cours du virage. En opposition à ces trois points de contact, le roulement 54-4 prend appui sur la surface cylindrique concave 137 en un point de contact P′C′₅.

Au cours du virage de la palette, le point de contact P′C′₅ décrit la courbe 137 alors que le point de contact P′C′₄ décrit la courbe 140. La forme de la courbe 137 se déduit donc de la forme de la courbe 140 par l'interposition entre les deux courbes d'un intervalle constant P′C′₄-P′C′₅ égal à la somme du rayon de la poulie motrice 41-4 et du roulement 54-4.

La forme des courbes 142, 140 et 148 des rails d'entraînement et la forme complémentaire du rail de guidage 137 sont déterminées pour optimiser le passage en courbe à très haute vitesse de la palette.

Généralement, ces différentes courbes sont des quarts de cercle qui présentent un rayon identique, par exemple de 20 mm, pour les courbes 142, 140 et 148, et un rayon égal à 20 mm auquel on ajoute la somme des dimensions du rayon de la poulie et du rayon du roulement pour la courbe 137. Les courbes 140 et 137 sont de forme quart-circulaire et sont concentriques.

L'entraînement de la palette 21-6 est effectué par trois roues motrices 41-2, 41-4, 41-3, qui roulent sans ripage ni dérapage parasite sur les surfaces cylindriques 142, 140, 148 que présente respectivement leur rail d'entraînement en appui précontraint. Le guidage de la palette est assuré, également en permanence, par le roulement 54-4 roulant sur la surface cylindrique 137 qui s'oppose directement aux effets de la force centrifuge engendrée par la vitesse de parcours en courbe de la palette.

Au cours de ce simple virage la palette change ainsi de direction de circulation sans changer son orientation dans l'espace. La palette 21-6 est entraînée et maintenue d'une manière aussi efficace que dans ses déplacements antérieurs dans les lignes droites et le carrefour décrits précédemment.

Après ce virage, la palette poursuit son parcours dans la branche 15, comme montré à la partie inférieure de la figure 1. Dans la forme de réalisation représentée sur la figure 1, la branche rectiligne 132 de la ligne générale de circulation se poursuit par une branche courbe 151 et la portion de rail de sollicitation 152, présentant une face d'extrémité convexe 153 à son entrée, se poursuit également par une partie courbe 154 parallèle à la partie courbe 151,généralement concentriques entre elles et dont le centre est montré en C˝.

L'organisation du raccordement entre la branche de sortie 15 de la dérivation 13 est analogue à celle du raccordement entre la branche 14 d'entrée de la dérivation et dans la réalisation représentée comprend une butée éclipsable 155 à surface cylindrique 156 et une équerre 157 à angle externe arrondi 158 et branches 159 et 161.

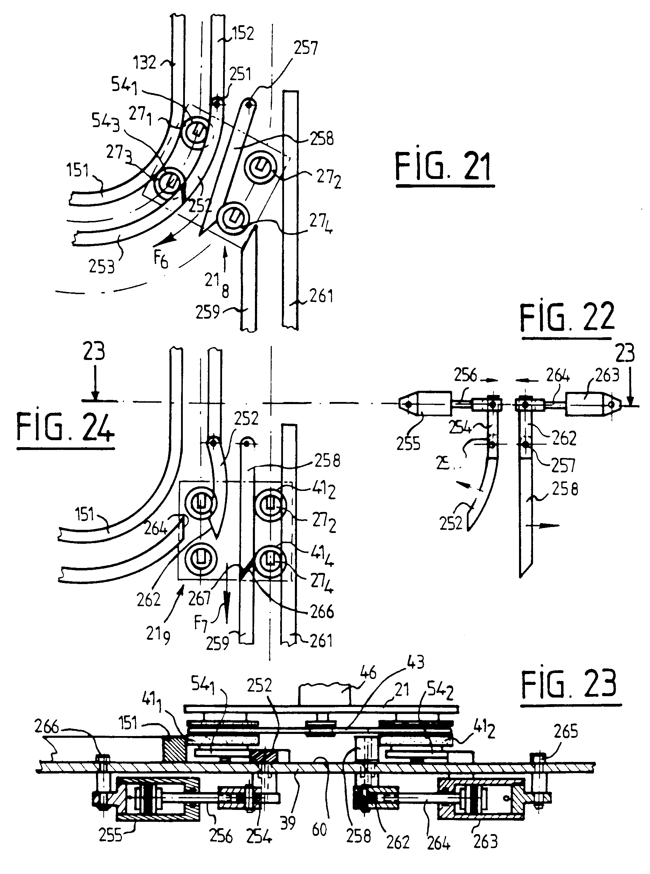

Sur la figure 20 on a montré une autre forme de réalisation de l'entraînement des poulies motrices d'une palette. Dans cette forme de réalisation, le moteur ou moto-réducteur électrique 46′ est fixé sur la face inférieure 322 de la palette et sur la poulie 44′ de l'arbre de sortie 45′ du moteur passe une courroie qui peut être crantée 43′ laquelle réalise l'entraînement des roues motrices comme dans la réalisation précédemment décrite,en passant par des poulies déviatrices 324 et 325.

On dispose ainsi d'une palette dont la face supérieure est parfaitement plane, ne présentant aucune saillie.

On se réfère maintenant aux figures 21 à 24. Dans cette forme de réalisation, à l'extrémité du rail 152 se raccorde à pivotement autour d'un axe 251 (figure 21), une portion de rail circulaire 252, laquelle se poursuit par un rail circulaire 253. La partie rectiligne du rail 132 se poursuit sans interruption par une partie circulaire 151. Sur la portion circulaire 252 s'exerce, par l'intermédiaire d'une biellette 254, l'action d'un vérin 255 par sa tige 256 (figure 22). La portion curviligne 252 repose sur la face supérieure 60 du plancher 39 de l'installation (figure 23).

A proximité de la portion circulaire 252 est montée, à pivotement autour d'un axe 257, proche de l'axe 251, une portion rectiligne de rail 258 qui, dans la condition montrée sur la figure 24, se raccorde avec un rail rectiligne 259. Celui-ci constitue, avec un rail 261, une voie de circulation rectiligne. La portion rectiligne 258, en contact avec la face supérieure 60 du plancher 39 de l'installation, est soumise, par l'intermédiaire d'une biellette 262, à l'action d'un vérin 263 à tige 264, ce vérin étant fixé à proximité de la face inférieure du plancher 39 par un boulon 265, le boulon correspondant de fixation du vérin 255 étant montré en 266 (figures 22 et 23).

Dans la condition schématisée sur la figure 21, la voie de circulation rectiligne ménagée par les rails 132 et 152 se poursuit par une partie curviligne, en analogie avec la disposition montrée sur la figure 1, une palette 21-8 emprunte une partie circulaire de voie, par exemple pour être conduite à une autre ligne générale de circulation parallèle à la ligne 11 et non montrée sur le dessin.

Le rail 132 est un rail d'entraînement alors que le rail 152 est un rail de guidage et d'appui précontraint ainsi que le rail circulaire 252 lorsqu'il est poussé par l'action du vérin 255 contre les roulements 54-1 et 54-3 de la palette 21-8, de même que le rail 253 qui le prolonge. Dans ces conditions la palette 21-8 suit un trajet incurvé avec modification de son orientation dans l'espace suivant un rayon de courbure qui par construction est nécessairement plus important que celui des virages dans lesquels les palettes 21-2 et 21-6, comme décrit précédemment, ne modifient pas leur orientation en changeant de direction.

Si, par contre, par l'action des vérins 255 et 263, la portion rectiligne de rail 258 est amenée dans le prolongement du rail rectiligne 259 et la partie curviligne de rail 252 est éloignée du rail curviligne 151, une palette 21-7 poursuit son mouvement rectiligne comme montré en 21-9, les plots 27-4 et 27-2 de ladite palette devenant opératoires pour son guidage rectiligne par coopération avec la partie rectiligne 258 de rail 259 et le rail rectiligne 261 tandis que la partie curviligne 252 s'éloigne du rail curviligne 151, le vérin 255 n'étant pas sous pression tandis que le vérin 263, sous pression, maintient la partie rectiligne de rail 258 dans le prolongement du rail rectiligne 259. La palette est donc guidée rectilignement, dans le prolongement de la ligne générale 11.

Le rail 258 est un rail d'entraînement et d'appui précontraint lorsqu'il est poussé par l'action du vérin 263 contre les poulies motrices 41-2 et 41-4 de la palette 21-9 de même que le rail 259 qui le prolonge, alors que le rail 261 guide les roulements 54-2 et 54-4 de la palette. La trajectoire rectiligne de la palette 21-9 est ainsi rigoureusement déterminée, sans jeu, comme schématisé par la flèche F7 (figure 24).

Les extrémités des parties de rail, respectivement 262 pour le rail curviligne 252, et 266 pour le rail rectiligne 258, sont obliques et les faces en regard, respectivement 264 et 267, sont également obliques, pour assurer une bonne continuité du guidage ou de l'entraînement (figure 24).

Dans une installation selon l'invention, les virages peuvent s'effectuer sans modification de l'orientation de la palette suivant un rayon très court, ce qui aboutit ainsi à un minimum d'encombrement pour l'installation.

Dans une même installation, les virages peuvent s'effectuer avec modification de l'orientation de la palette lorsque, par exemple, les raisons d'ergonomie ou des nécessités techniques prédominent le critère d'encombrement de leur aire de virage.

La palette est guidée d'une manière continue, sans jeu, sous précontrainte permanente, et ne peut prendre des mouvements parasites, malgré des souillures que peut présenter le plancher, assurant ainsi une stabilité parfaite à la pièce qu'elle supporte.

Les roues motrices entraînent la palette, en s'affranchissant en partie du poids de la charge transportée, sans dérapage, sans mouvement différentiel dans les virages, évitant ainsi l'usure du revêtement desdites roues.

La vitesse de circulation peut être élevée et les palettes se succéder avec un intervalle minimal sans risque de tamponnement.

Suivant la configuration du trajet de circulation, la palette est entraînée par une poulie, ou bien deux poulies, ou bien trois poulies, qui sont alors des poulies motrices.

Le rôle des plots d'une palette varie suivant la configuration de la circulation.

Les rôles des deux rails autodirecteurs servant pour l'entraînement de la palette et son guidage précontraint peuvent varier.

Un même rail peut servir pour l'entraînement et la sollicitation de la roue contre l'autre rail ou bien ces rôles peuvent être affectés respectivement à l'un et à l'autre rail.

Des portions de rail sont éclipsables ou pivotables pour répondre aux diverses conditions posées par les configurations souhaitées.

Les moyens de précontrainte,au lieu d'être intégrés à l'un ou à l'autre des rails,peuvent être intégrés aux palettes.

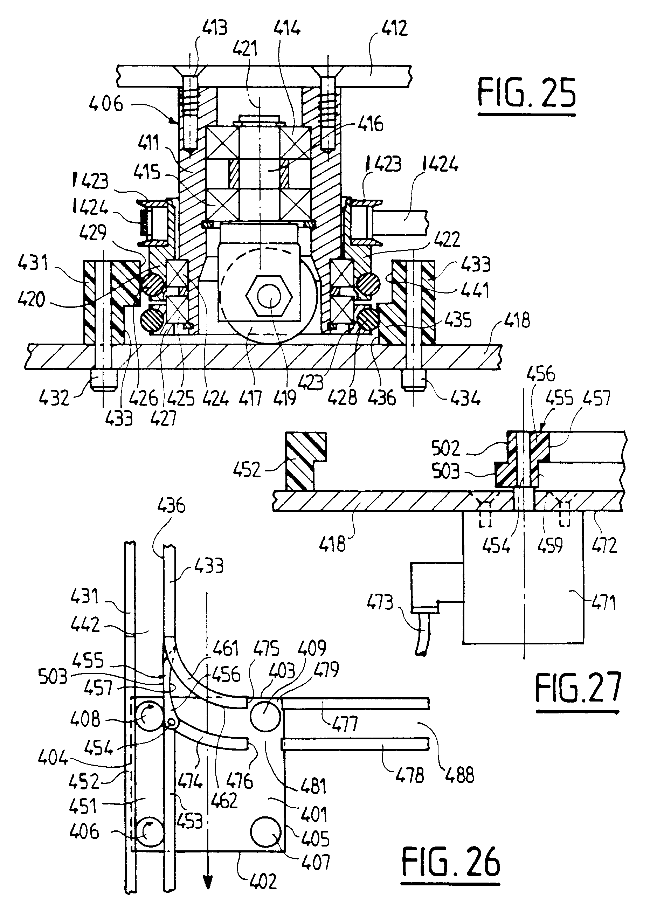

Une installation visant une telle forme de réalisation est montrée sur les figures 25 à 30.

Une palette 401 à contour rectangulaire, limitée par des côtés 402, 403, 404 et 405 (figure 26), est équipée en ses angles de plots respectivement antérieurs 406 et 407 et postérieurs 408 et 409. Un tel plot, par exemple 406, comporte un corps de plot 411, (figure 25), tubulaire, cylindrique, fixé sur le corps 412 de la palette, ou plateau, par des vis 413. A l'intérieur du corps de plot est logé, par l'intermédiaire de deux roulements à billes 414 et 415, un dispositif de roulement 416 dont la roue 417, auto-orientable, repose sur le plancher 418 de l'installation, l'axe de rotation 419 de la roue étant décalé par rapport à l'axe vertical 421 du corps de plot.

Sur ce dernier sont montés, superposés, un premier dispositif de roue 422 et un second dispositif de roue 423 coaxial par l'intermédiaire de roulements à billes, respectivement 424 et 425. Le premier dispositif de roue 422 comprend, solidaire de son corps, une poulie 423 sur laquelle passe une courroie d'entraînement 424 reliée à un moteur électrique que porte la pallette. Le dispositif de roue 422 présente une jante 420 garnie d'un bandage ou "pneu" présentée dans cette réalisation en forme de jonc torique 426 en matériau élastique. Le second dispositif de roue 423 comprend une jante 427 montée folle autour du corps de plot 411 par l'intermédiaire du roulement à billes 425; cette jante est garnie également d'un bandage ou "pneu" 428 en matériau élastique. Les diamètres extérieurs des bandages ou "pneus" 426 et 428 en condition de non-sollicitation sont égaux et de formes identiques dans un but de simplification.

Le "pneu" 426 est propre à coopérer, lorsque la roue 417 roule sur le plancher dans la condition montrée sur la figure 25, avec la face verticale 429 d'un premier rail 431 fixé sur le plancher 418 par des vis 432. Le rail 431 a une base moins épaisse que sa partie supérieure, la partie verticale inférieure 433 dudit rail étant ainsi à distance du "pneu" 428.

Un second rail 433 est fixé sur le plancher 418 par des vis 434. Il est parallèle au rail 429 et présente une partie inférieure 435 plus épaisse que la partie supérieure, la face inférieure verticale 436 dudit rail pouvant ainsi coopérer avec le "pneu" 428 tandis que la partie supérieure 441 reste à distance du "pneu" 426 de la roue supérieure.

La distance entre les faces opératoires 429 et 436 des deux rails 431 et 433 est inférieure d'environ 0,8 mm au diamètre extérieur des bandages ou "pneus" en condition de non sollicitation.

Lorsque la roue supérieure 422 est entraînée en rotation par la courroie 424, le plot 406, sollicité élastiquement par coopération du "pneu" inférieur 428 contre le rail 433 applique le "pneu" supérieur 426 contre la face supérieure 429 du rail 431, mettant ainsi en mouvement la palette, celle-ci étant guidée d'une manière constante et sans jeu par coopération précontrainte de ses plots avec les rails de guidage/entraînement.

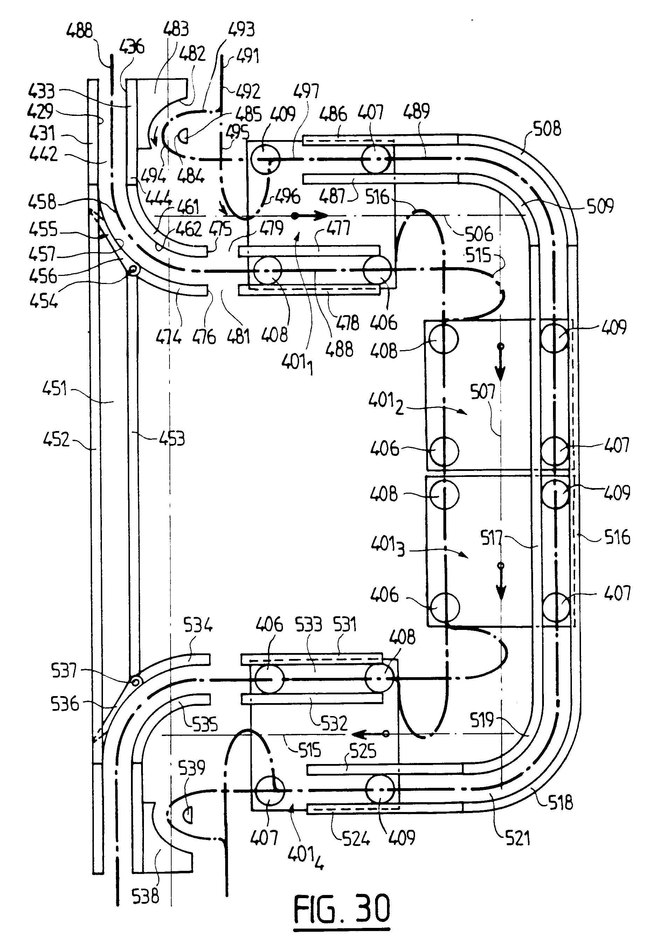

Les figures 26 et suivantes montrent schématiquement les moyens prévus pour faire passer une palette d'une trajectoire rectiligne à une trajectoire rectiligne perpendiculaire et cela suivant un virage d'encombrement minimal dans un carrefour à trois voies. La voie 442 (figure 26) ménagée par les rails rectilignes 431 et 433, qui se prolonge par une voie rectiligne 451 ménagée par des rails rectilignes 452 et 453 comprend, monté à rotation autour d'un axe 454 que présente le rail 453, un aiguillage 455 (figures 26 et 27) dont le corps 456 présente une face verticale interne à la partie supérieure 457 plus proche de la ligne moyenne 458 (figure 30) de la voie curviligne que la partie inférieure 459. Le rail curviligne 461, qui prolonge le rail 433 et a la même configuration que celui-ci présente ainsi une face interne 462 qui prolonge la face interne 436 du rail rectiligne 433.

La figure 26 montre la condition de l'installation dans le cas où la palette, arrivant par la voie rectiligne 442 doit poursuivre sa trajectoire rectiligne suivant la voie 451. Dans cette condition, l'aiguillage 455 a, par pivotement autour de l'axe 454, pris la position suivant laquelle sa face 503, opposée à sa face 457, est dans le prolongement de la face interne du rail rectiligne 433. Sa face opératoire présente ainsi une face verticale 502 (figure 27) en retrait par rapport à la face 503 et c'est avec cette dernière que coopère le "pneu" 428 que présentent les roues 427 des plots externes 406 et 408 montées folles autour de l'axe vertical desdits plots.

Dans la condition montrée sur la figure 26, le plot 409 traverse la voie 488 que ménagent les rails 477 et 478, la palette restant maintenue d'une manière parfaite et complète par coopération du plot 408 avec d'une part le rail rectiligne 452 et l'aiguillage 456 et du plot 406 avec les rails 452 et 453 prolongeant les rails 431 et 433.

L'actionnement de l'aiguillage 455 est commandé par une étiquette 505 à effet électronique que porte la palette.

La rotation dudit aiguillage 454 se fait sous l'effet d'un cylindre 471 (figure 27) fixé sous la face inférieure 472 du plancher 418 et qui est réuni par une tuyauterie 473 à une source de pression.

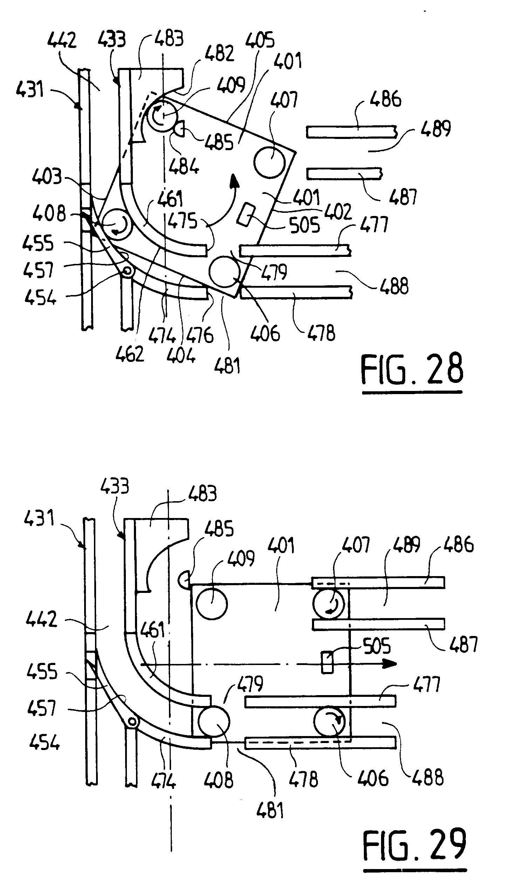

Dans le prolongement de l'aiguillage 455 dans la condition montrée sur les figures 28 et 29 est fixé sur le plancher 418 un rail curviligne 474 parallèle au rail 461 ; les faces frontales 475 et 476 des rails curvilignes, respectivement 461 et 474, sont coplanaires. Elles ménagent, avec des rails rectilignes 477 et 478 perpendiculaires aux rails 431 et 433 des intervalles respectivement 479 et 481 de largeur propre à laisser passer librement les plots 407 et 409 d'une palette 401 se déplaçant perpendiculairement auxdits rails.

Lors de la circulation d'une palette dans la ligne générale 488 (figure 28) avec ses plots 406, 408, dans la voie 442, son entraînement a lieu par coopération des "pneus" 426 des plots antérieur et postérieur externes avec la face verticale supérieure 429 du rail contre laquelle ils sont appliqués par l'appui des "pneus" 428 contre la face verticale inférieure 436 du rail 433, la circulation se faisant ainsi sans qu'il y ait possibilité de jeu. Cet entraînement et ce guidage se poursuivent jusqu'à l'arrivée du plot antérieur 406 dans la partie curviligne de la voie limitée par le rail curviligne 461 et l'aiguillage 455.

L'incurvation donnée à la trajectoire des plots 406 et 408 entraîne un changement d'orientation de la palette, une position intermédiaire étant montrée sur la figure 28. Dans cette position, dans laquelle le plot externe antérieur 406 a échappé au guidage par les rails curvilignes 474 et 461, la continuité du guidage et de l'entraînement de la palette sont assurés non seulement par le plot 408 mais aussi par coopération du plot interne postérieur 409 avec d'une part la face incurvée 482 d'une came 483 fixée sur le plancher 418 de l'installation et d'autre part la face incurvée à plus faible rayon de courbure 484 d'une came en regard 485. La face incurvée 482 est détalonnée comme l'est la face opératoire du rail, pour coopérer avec le "pneu" supérieur du plot et la partie opératoire de la face incurvée 484 de la came 485 est également détalonnée, comme l'est la face interne du rail rectiligne 433, pour coopérer avec le "pneu" inférieur 428 du plot 409.

Le maintien latéral de la palette dans cette condition de virage, à l'intérieur d'un carrefour à trois voies perpendiculaires, se fait donc avec la même efficacité que dans son parcours sur la partie rectiligne de la voie 442, c'est-à-dire au moyen de l'entraînement/guidage permanent continu d'au moins deux de ses plots, sans possibilité de jeu dans un sens ou dans un autre.

Le maintien latéral de la palette par les deux plots 408 et 409 se poursuit jusqu'à ce que le plot 406 coopère avec les rails rectilignes 477 et 478 avant que le plot 409 ait échappé au guidage des cames curvilignes 483 et 485 (figure 28).

Le maintien latéral de la palette par les deux plots 406 et 408 se poursuit jusqu'à ce que le plot 407 coopère avec les rails rectilignes 486 et 487 avant que le plot 408 ait échappé au guidage des rails curvilignes 461 et 474 (figure 29).

Le maintien latéral de la palette par les deux plots 407 et 406 se poursuit jusqu'à ce que le plot 408 joue le rôle du plot 406 guidé par les rails rectilignes 477 et 478 (figure 30).

On a montré par la ligne en trait mixte 491 (figure 30) la trajectoire du centre du plot 409 laquelle comprend, après une partie rectiligne 492, une boucle ouverte 493 à deux branches latérales reliées par une courbe 494 parallèle à la face opératoire 482 de la came 483, et par la ligne en trait mixte 495, la trajectoire du plot 407 qui, à partir de la partie rectiligne, comprend une boucle 496 dont l'orientation est perpendiculaire à celle de la boucle 493.

Lesdites trajectoires se poursuivent par une partie rectiligne 497 parallèle aux rails 486 et 487.

Le changement de direction de la palette 401, après avoir circulée dans la branche 506 (figure 30) perpendiculaire à la branche d'arrivée, pour la faire circuler dans la branche 507 perpendiculaire à la branche 506, est commandé par des rails incurvés 508 et 509 prolongeant respectivement les rails rectilignes 486 et 487. Ces rails servent au guidage/entraînement d'une palette par ses plots 409 et 407.

On a représenté par les lignes en trait mixte, respectivement 515 et 516, les trajets des plots respectivement 406 et 408 au cours du virage.

On a montré deux palettes 401₂ et 401₃ sur la voie 507 parallèle à la voie générale de circulation en des positions d'usinage ou d'assemblage.

Le passage d'une palette de la branche 507 à la branche perpendiculaire 515 de raccordement à la ligne générale 451 se fait de façon analogue, les parties rectilignes 516 et 517 des rails se prolongent par des parties curvilignes 518 et 519 ménageant une partie de voie curviligne 521, ces rails servent au guidage/entraînement d'une palette par ses plots 409 et 407.

Le guidage/entraînement de la palette 401₄ le long de la voie 515 est assuré d'une part par la paire de rails rectilignes 531 et 532 ménageant une voie 533 pour les plots 406 et 408 de la palette et par la paire de rails 524 et 525 coopérant avec les plots 407 et 409 de la palette, la paire de rails 531, 532 étant légèrement à l'aval de la paire de rails 524 et 525.

Le retour d'une palette à la ligne générale se fait par des moyens analogues à ceux qui ont été décrits ci-dessus pour le passage de la ligne générale à la ligne de dérivation 506. Ces moyens comprennent deux rails curvilignes 534 et 535, le rail 534 se prolongeant par un aiguillage 536 analogue à l'aiguillage 455 et monté à rotation autour d'un pivot 537. L'entraînement/guidage permanent, de la palette au cours de son virage, dans ce carrefour à trois voies, est obtenu par coopération du plot 407 avec une première came 538 et une seconde came en regard 539 pour assurer la continuité du guidage et de l'entraînement de la palette pendant le temps ou le plot externe postérieur 408 échappe au guidage des rails rectilignes 531 et 532 avant d'être de nouveau guidé par les rails circulaires 534 et 535.

Les moyens de précontrainte du maintien latéral des plots de la palette intégré aux palettes par le jeu de l'élasticité de ses "pneus" peut être doublé par les moyens de fixation élastique des cames et/ou rails sur le plancher de l'installation comme décrit dans la réalisation précédente.

Dans les réalisations précédemment décrites, le changement de direction de circulation d'une palette à un carrefour est de 90°. L'invention vise également les réalisations dans lesquelles le changement de direction est d'un angle différent.

Dans les indications ci-dessus, de la position des plots aux angles d'une palette, il faut tenir compte du fait que, dans les figures, les vues correspondent comme mentionné à celles d'un observateur placé sous le plancher de l'installation, supposé transparent.

## Revendications

1. Palette motorisée, généralement rectangulaire, destinée à servir dans une installation pour l'usinage et/ou l'assemblage de pièces,
l'installation comprenant une surface de roulement (60; 418) et un système de portions de rail d'entraînement et/ou de guidage définissant une voie principale (11; 451), des voies secondaires (13; 506), et leurs interconnexions (91, 158; 455),
ladite palette (21; 401) comportant des moyens de soutien comprenant des roues-support (38; 417) propres à coopérer avec la surface de roulement (60; 418), et des moyens d'entraînement/guidage propres à coopérer avec le système de portions de rails, ces moyens d'entraînement/guidage comprenant des couples roue motrice/roue de guidage (41/54; 422/423),
caractérisée en ce qu'un couple roue motrice/roue de guidage (41/54; 422/423) est agencé sous la forme d'une roue horizontale motrice (41; 422) et d'une roue horizontale de guidage (54; 423) libre en rotation, ces deux roues étant coaxialement (32; 421) superposées, sensiblement au-dessus et autour d'une roue-support (38; 417), d'axe horizontal (37; 419), verticale et auto-orientable sur ladite surface de roulement qui définit l'horizontale, un tel couple de roues horizontales constituant, avec la roue-support qu'elle surmonte, une structure d'étendue verticale dite "plot" (27; 406), lesdites roues horizontales étant logeables entre ou contre des portions de rail pour définir un point de contact (PC) du guidage de la palette et permettre son entraînement, et
en ce qu'au moins un second plot (27-2) fait saillie à une distance du premier plot (27-1) choisie pour que l'une au moins de ses roues horizontales (41-2, 54-2) vienne en contact avec les portions de rails qui coopèrent avec le premier plot (27-1), ou avec d'autres portions de rails du système, en définissant un second point de contact pour le guidage de la palette (21), et que l'entraînement de la palette (21; 401) peut être assuré par l'une au moins des roues horizontales motrices (41; 422) du premier et du second plot.

2. Palette selon la revendication 1, caractérisée en ce qu'elle comprend quatre plots (27-1 à 27-4; 406 à 409) dont les distances d'entre-axes, les diamètres des roues horizontales superposées et les niveaux d'engagement prédéterminés de celles-ci sont choisis en correspondance des positions relatives des portions de rails d'entraînement et/ou de guidage (52, 56, 135, 136, 152, 132; 455, 433), fixes ou mobiles de l'installation, pour rendre sélectivement opératoire la coopération simultanée d'au moins deux de ses plots, chacun desdits plots faisant coopérer de façon combinée avec les autres plots, une roue motrice (41; 422) et/ou une roue de guidage (54; 423) avec le système de portions de rails, permettant d'assurer le mouvement continu de la palette, aussi bien en translation rectiligne longitudinale, ou transversale, qu'en rotation, tout en conservant ou modifiant, en fonction des besoins, l'orientation spatiale de la palette par rapport à la surface de roulement de l'installation.

3. Palette selon l'une des revendications 1 et 2, caractérisée en ce que lesdites roues horizontales motrices (41; 422) sont toutes entraînées avec une même vitesse de rotation.

4. Palette selon l'une des revendications 1 à 3, caractérisée en ce que lesdites roues horizontales motrices (41; 422) sont chacune associées à une poulie d'entraînement (42; 423) autour de laquelle passe une courroie (43; 424) qui est entraînée par un moteur (46) de type standard embarqué sur la palette.

5. Palette selon la revendication 4, caractérisée en ce que, dans chaque plot, la roue horizontale motrice (41; 422) et la poulie (42; 423) qui lui est associée sont coaxialement disposées autour d'un même axe vertical (32; 421).

6. Palette selon la revendication 5, caractérisée en ce que, dans chaque plot, ledit axe vertical (32; 421) n'intersecte pas l'axe horizontal (37; 419) d'une roue-support auto-orientable (38; 417) située au-dessous de la palette (21; 401), ce qui permet de préserver leur auto-orientation en fonctionnement.

7. Palette selon l'une des revendications 1 à 6, caractérisée en ce qu'au moins quelques-unes (422, 423) des roues horizontales présentent un bandage élastique ou "pneu" de précontrainte (426, 428).

8. Palette selon l'une des revendications 1 à 6, caractérisée en ce qu'au moins quelques-unes des roues horizontales présentent une surface d'appui qui peut coopérer avec au moins une ou plusieurs portions de rails exerçant directement ou indirectement sur cette surface d'appui une pression élastique de précontrainte.

9. Installation pour l'usinage et/ou l'assemblage de pièces portées par des palettes, généralement rectangulaires, du type comprenant des palettes, un support possédant un plancher (60, 418) sensiblement horizontal sur lequel sont installées, en des positions choisies, des portions de rails d'entraînement (52, 132, 136; 431) et/ou de guidage (56, 17, 135; 433) définissant, essentiellement par couples, une voie principale (11; 451), des voies secondaires (13; 506), et leurs interconnexions (91, 158; 455), lesdites portions de rail permettant à au moins une palette de se déplacer pour desservir des postes de travail, caractérisée en ce que les palettes sont des palettes selon l'une au moins des revendications 1 à 8.

10. Installation selon la revendication 9, caractérisée en ce que les portions de rails présentent en des niveaux prédéterminés des pistes de roulage (55; 436) ou d'entraînement (51; 429) qui se font face.

11. Installation selon l'une des revendications 9 et 10, caractérisée en ce que les portions de rail comprennent des portions curvilignes actionnables (252; 455) et agencées sur le plancher au voisinage des interconnexions pour coopérer de façon commandée avec au moins un plot de la palette, ce qui permet de faire entrer une palette dans une piste secondaire.

12. Installation selon l'une des revendications 9 à 11, caractérisée en ce que lesdites portions de rail comprennent des éléments de rail consacrés au guidage (56, 135, 152), dont la piste de roulage (55, 134; 436) est apte à coopérer avec les roues horizontales de guidage (54; 423) montées à rotation libre, et
en ce que lesdites portions de rail comprennent également des éléments de rail consacrés à l'entraînement (52, 132, 136; 431), dont la piste d'entraînement est destinée à coopérer avec les roues horizontales motrices (41; 422), et qui peut faire fonction, également, de piste de guidage.

13. Installation selon l'une des revendications 9 à 12, caractérisée en ce que ledit support comprend également des postes de travail comportant des moyens de guidage additionnels propres à coopérer avec un bord de référence (25) de la palette.

14. Installation selon la revendication 13, caractérisée en ce que, audit poste de travail, le support est en outre pourvu de moyens pour indexer une palette (307-309), ces moyens étant situés à l'opposé du bord de référence.

## Claims

1. A motorised pallet of generally rectangular shape designed for use in an installation for the machining and/or assembly of parts,
the installation comprising a rolling surface (60; 418) and a system of portions of drive and/or guide rail defining a main track (11; 451), secondary tracks (13; 506), and their interconnections (91, 158; 455),
the said pallet (21; 401) comprising means of support comprising supporting wheels (38; 417) designed to act together with the rolling surface (60; 418) and drive/guide means designed to act together with the system of portions of rails, these drive/guide means comprising drive wheel/guide wheel pairs (41/54; 422/423), characterised in that one drive wheel/guide wheel pair (41/54; 422/423) is arranged in the form of a horizontal drive wheel (41; 422) and a horizontal guide wheel (54; 423) which is free to rotate, the two wheels being superimposed coaxially (32; 421) substantially above and around a supporting wheel (38; 417), having a horizontal axis (37; 419), which is vertical and self-orientatable on the said rolling surface which defines the horizontal, such a pair of horizontal wheels comprising with the supporting wheel above which they lie a structure of vertical extent called a "pad" (27; 406), the said horizontal wheels being capable of being placed between or against portions of rail to define a point of contact (PC) for guidance of the pallet and to enable it to be driven, and
in that at least one second pad (27-2) projects at a distance from the first pad (27-1) selected so that at least one of its horizontal wheels (41-2, 54-2) comes into contact with the portions of rail which act together with the first pad (27-1) or with other portions of rails of the system, defining a second point of contact for guiding the pallet (21), and in that the pallet (21; 401) may be driven by at least one of the horizontal drive wheels (41; 422) of the first and second pads.

2. A pallet according to claim 1, characterised in that it comprises four pads (27-1 to 27-4; 406 to 409) in which the spacings between the axes, the diameters of the superimposed horizontal wheels and the predetermined levels at which these engage are selected according to the relative positions of the portions of drive and/or guide rails (52, 56, 135, 136, 152, 132; 455, 433) of the installation, which may be fixed or moving, to render simultaneous cooperation between at least two of its pads selectively operational, each of the said pads causing a drive wheel (41; 422) and/or a guide wheel (54; 423) to act in a combined way with the other pads with the system of portions of rail to ensure continuous movement of the pallet in both longitudinal rectilinear or transverse motion and in rotation, while retaining or modifying, as necessary, the spacial orientation of the pallet with respect to the rolling surface of the installation.

3. A pallet according to one of claims 1 and 2, characterised in that the said horizontal drive wheels (41, 422) are all driven at the same rotation speed.

4. A pallet according to one of claims 1 to 3, characterised in that the said horizontal drive wheels (41; 422) are each associated with a drive pulley (42; 423) around which passes a belt (43; 424) which is driven by a motor (46) of the standard type mounted on the pallet.

5. A pallet according to claim 4, characterised in that on each pad the horizontal drive wheel (41; 422) and the pulley (42; 423) associated with it are coaxially arranged about the same vertical axis (32; 421).

6. A pallet according to claim 5, characterised in that in each pad the said vertical axis (32, 421) does not intersect the horizontal axis (37; 419) of a self-orientating supporting wheel (38, 417) located beneath the pallet (21; 401), thus enabling them to preserve their self-orientation when in operation.

7. A pallet according to any one of claims 1 to 6, characterised in that at least some (422, 423) of the horizontal wheels have a prestressing elastic band or "tyre" (426, 428).

8. A pallet according to any one of claims 1 to 6, characterised in that at least some of the horizontal wheels have a bearing surface which can act with at least one or several portions of rail exerting an elastic prestressing pressure directly or indirectly against this bearing surface.

9. An installation for the machining or assembly of parts borne on generally rectangular pallets of the type comprising pallets, a support having a substantially horizontal floor (60, 418) on which are installed, in selected positions, portions of drive rails (52, 132, 136; 431) and/or guide rails (56, 17, 135; 433) defining, essentially in pairs, a main track (11; 451), secondary tracks (13; 506) and their interconnections (91, 158; 455), the said portions of rail enabling at least one pallet to move to serve workstations, characterised in that the pallets are pallets in accordance with at least one of claims 1 to 8.

10. An installation according to claim 9, characterised in that the portions of rails have rolling tracks (55; 436) or drive tracks (51; 429), opposite each other, at predetermined levels.

11. An installation according to either of claims 9 and 10, characterised in that the portions of rail comprise switchable curved portions (252; 455) and which are mounted on the floor in the vicinity of the interconnections to act together in a controlled way with at least one pad of the pallet, which makes it possible to cause the pallet to enter a secondary track.

12. An installation according to one of claims 9 to 11, characterised in that the said portions of rail comprise rail elements which are devoted to guidance (56, 135, 152), of which the rolling track (55, 134; 436) is capable of acting together with the horizontal guide wheels (54, 423) which are mounted so as to rotate freely, and
in that the said portions of rail also comprise rail elements devoted to driving (52, 132, 136; 431), of which the drive track is designed to act together with the horizontal drive wheels (41; 422), and which can also act as a guide track.

13. An installation according to one of claims 9 to 12, characterised in that the said support also comprises workstations comprising additional guidance means capable of acting together with a reference edge (25) of the pallet.

14. An installation according to claim 13, characterised in that at the said workstation the support is also provided with means to index a pallet (307-309), these means being located opposite the reference edge.

## Patentansprüche

1. Mit einem motorischen Antrieb versehene, im wesentlichen rechteckige Palette zur Verwendung in einer Anlage zum Bearbeiten und/oder Zusammensetzen von Teilen, wobei die Anlage eine Rollfläche (60, 418) und ein System von Schienenabschnitten zum Antreiben und/oder zum Führen aufweist, die einen Hauptstrang (11; 451), Nebenstränge (13; 506) und deren Verbindungen (91, 158, 455) bilden und wobei die Palette (21;401) mit Stützmitteln versehen ist, die Tragrollen (38; 417) umfassen, welche geeignet sind, mit der Rollfläche zu kooperieren, sowie Antriebs- und Führungsmittel, die geeignet sind, mit dem System von Schienenabschnitten zu kooperieren, wobei diese Antriebs- und Führungsmittel Paare von Antriebs- und Führungsrollen enthalten, dadurch gekennzeichnet, daß ein Antriebs/Führungsrollenpaar (41/54, 422/423) in Form einer horizontalen Antriebsrolle (41;422) und einer horizontalen Führungsrolle (32;421) ausgeführt ist, die frei drehbar ist, wobei diese beiden Rollen koaxial übereinander unmittelbar über und um eine vertikale Tragrolle mit horizontaler Achse angeordnet sind, die sich auf der die Horizontale definierenden Rollbahn selbstlenkend bewegen kann und ein solches horizontales Rollenpaar mit der Trägerrolle, auf der es montiert ist, einen vertikalen Aufbau, genannt _{"}plot" (Kontaktblock) (27; 406)bildet, die genannten horizontalen Rollen führbar sind zwischen oder an Schienenabschnitten, mit denen sie einen Kontaktpunkt (PC) zur Führung der Palette und zu deren Antrieb haben;
und daß wenigstens ein zweiter _{"}Kontaktblock" in einem Abstand vom ersten Kontaktblock (27-1) so angebaut ist, daß wenigstens eine seiner horizontalen Rollen (41-2, 54-2) in Kontakt kommt mit den Schienenabschnitten, die mit dem ersten Kontaktblock (27-1) zusammenwirken, oder mit anderen Schienenabschnitten des Systems, um einen zweiten Kontaktpunkt für die Führung der Palette (21) zu definieren,
und daß der Antrieb der Palette (21;401) gewährleistet werden kann durch wenigstens eine der horizontalen Antriebsrollen(41,422) des ersten und des zweiten Kontaktblocks.

2. Palette nach Anspruch 1, dadurch gekennzeichnet, daß sie vier Kontaktblöcke (27-1 bis 27-4; 406 bis 409) enthält, wobei deren Achsabstände, die Durchmesser der übereinanderliegenden horizontalen Rollen und die von diesen festgelegten Eingriffshöhen den jeweiligen Lagen der in der Anlage ortsfest angeordneten oder beweglichen Antriebsschienen und/oder der Führungsschienenabschnitte (52, 56, 135, 136, 152, 132, 455, 433) entsprechend gewählt sind, um wahlweise das gleichzeitige Zusammenwirken wenigstens zweier ihrer Kontaktblöcke zu bewirken, wobei von jedem dieser Kontaktblöcke in Kombination mit den anderen Kontaktblöcken jeweils eine Antriebsrolle (41;422) und/oder eine Führungsrolle (54; 423) mit dem System der Schienenabschnitte so zusammenwirkt, daß die kontinuierliche Bewegung der Palette möglich ist, und zwar sowohl gerade in Längsrichtung oder in Querrichtung, wie auch in Drehung aller unter bedarfsweiser Beibehaltung oder Änderung der räumlichen Richtung der Palette in Bezug auf die Rollfläche der Anlage.

3. Palette nach einem der Ansprüche 1 oder 2, dadurch gekennzeichnet, daß alle horizontalen Antriebsrollen (41; 422) mit der gleichen Drehgeschwindigkeit angetrieben sind.

4. Palette nach einem der Ansprüche 1 bis 3, dadurch gekennzeichnet, daß jede der horizontalen Antriebsrollen (41; 422) mit einer Antriebsriemenscheibe (42;424) vereinigt ist, um welche ein Riemen (43;424) läuft, der von einem gewöhnlichen Motor (46) angetrieben wird, der auf der Palette angeordnet ist.

5. Palette nach Anspruch 4, dadurch gekennzeichnet, daß in jedem Kontaktblock die horizontale Antriebsrolle (41,422) und die mit ihr vereinigte Riemenscheibe (42, 423) koaxial zu einer gemeinsamen Vertikalen Achse (32, 421) angeordnet sind.

6. Palette nach Anspruch 5, dadurch gekennzeichnet, daß in jedem Kontaktblock die genannte vertikale Achse (32; 421) nicht die horizontale Achse (37, 419) einer selbstlenkbaren Tragrolle (38; 417) schneidet, die unterhalb der Palette (21;401) angeordnet ist und wodurch deren Selbstlenkbarkeit gewahrt wird.

7. Palette nach einem der Ansprüche 1 bis 6, dadurch gekennzeichnet, daß wenigstens einiger der horizontalen Rollen (422, 423) einen elastischen Mantel oder vorgespannten Reifen aufweist.

8. Palette nach einem der Ansprüche 1 bis 6, dadurch gekennzeichnet, daß wenigstens einige der horizontalen Rollen eine Stützfläche aufweisen, die zusammenwirken können mit wenigstens einem oder mehreren Schienenabschnitten, indem diese auf diese Stützflächen direkt oder indirekt einen elastischen Vorspannungsdruck ausüben.

9. Anlage zum Bearbeiten und/oder Zusammenfügen von Teilen, die getragen werden von im wesentlichen rechteckigen Paletten des Typs, der einen Träger mit einem im wesentlichen horizontalen Boden aufweist, auf dem an ausgewählten Stellen Abschnitte von Antriebsschienen (52, 132, 136, 431) und/oder von Führungsschienen (56, 17, 135; 433) angeordnet sind, die jeweils hauptsächlich paarweise eine Hauptbahn (11;451) sowie Nebenbahnen (13;506) und deren Verbindungen bilden, wobei diese Schienenabschnitte wenigstens einer Palette erlauben, sich zu verschieben, um eine Arbeitsstation zu bedienen, dadurch gekennzeichnet, daß die Paletten nach wenigstens einem der Ansprüche 1 bis 8 ausgebildet sind.

10. Anlage nach Anspruch 9, dadurch gekennzeichnet, daß die Schienenabschnitte in vorgegebenen Höhenlagen Abrollbahnen (55;436) oder Antriebsbahnen (51;429) bilden, die sich gegenüberliegen.

11. Anlage nach einem der Ansprüche 9 und 10, dadurch gekennzeichnet, daß die Schienenabschnitte mit verstellbaren kurvenartigen Teilstücken (252;455) versehen sind, die auf dem Boden in der Nähe von Verbindungen angeordnet sind, um auf Befehl mit wenigstens einem Kontaktblock der Palette zusammenzuwirken, der einer Palette das Einfahren in eine Nebenbahn erlaubt.

12. Anlage nach einem der Ansprüche 9 bis 11, dadurch gekennzeichnet, daß die genannten Schienenabschnitte Elemente (56, 135, 152) aufweisen, die zum Führen bestimmt sind, deren Abrollbahn (55, 134, 436) geeignet ist, mit den horizontalen frei drehbar gelagerten Führungsrollen (54;423) zusammenzuwirken, und
daß die genannten Schienenabschnitte auch zum Antrieb bestimmte Elemente (52, 132, 136, 431) aufweisen, deren Antriebsbahnen dazu bestimmt sind, mit den horizontalen Antriebsrollen zusammenzuwirken und die auch als Führungsbahnen dienen können.

13. Anlage nach einem der Ansprüche 9 bis 12, dadurch gekennzeichnet, daß der genannte Träger auch Arbeitsstationen enthält, die zusätzliche Führungsmittel aufweisen, welche geeignet sind, mit einer Bezugskante (25) der Palette zusammenzuwirken.

14. Anlage nach Anspruch 13, dadurch gekennzeichnet, daß in der genannten Arbeitsstation, der Träger unter anderem mit Mitteln zur Indexierung einer Palette (307-309) versehen ist, die auf der der Bezugskante gegenüberliegenden Seite angeordnet sind.
